# FASCICULE DE BREVET EUROPEEN

(11) **EP 4 297 984 B1**
(45) Date de publication et mention de la délivrance du brevet: **20.08.2025**
(21) Numéro de dépôt: 22708985.1
(22) Date de dépôt: 14.02.2022
(51) Int. Cl.: B29D 30/06, B60C 23/20, B60C 19/00, B29D 30/00

(54) **SYSTEME DE MESURE DE LA TEMPERATURE INTERNE D'UN PNEUMATIQUE EN ROULAGE**
SYSTEM ZUR MESSUNG DER INNENTEMPERATUR EINES LAUFENDEN REIFENS
SYSTEM FOR MEASURING THE INTERNAL TEMPERATURE OF A RUNNING TIRE

(30) Priorité: 25.02.2021 FR 2101821
(43) Date de publication de la demande: 03.01.2024
(73) Titulaire: COMPAGNIE GENERALE DES ETABLISSEMENTS MICHELIN, 63000 Clermont-Ferrand (FR)
(72) Inventeur: BLONDELET, Michel, 63040 CLERMONT-FERRAND Cedex 9 (FR); BESNARD, Nicolas, 63040 CLERMONT-FERRAND Cedex 9 (FR); RICHEZ, Sylvie, 63040 CLERMONT-FERRAND Cedex 9 (FR); SERVAUD, Grégory, 58640 VARENNES-VAUZELLES (FR)
(74) Mandataire: M.F.P. Michelin
(86) Numéro de dépôt international: PCT/FR2022/050258
(87) Numéro de publication internationale: WO 2022/180319

(56) Documents cités:
- WO-A1-2004/016454
- US-A- 5 731 754
- US-A1- 2005 057 346
- US-A1- 2017 282 657
- US-B1- 10 836 223

## Description

### Domaine technique

La présente invention concerne un système de mesure de la température à l'intérieur d'un mélange de caoutchouc d'un pneumatique en conditions réelles de roulage. Les pneumatiques principalement concernés équipent les véhicules du génie civil d'exploitation des mines.

Par exemple, de tels véhicules (Dumper ou Tombereau) sont utilisés dans des mines à ciel ouvert pour transporter des matériaux extraits de carrières avec des chargements qui peuvent atteindre une masse de plus de 350 tonnes. Les pneumatiques sont dimensionnés en conséquence, et peuvent peser chacun aux environs de 5 tonnes.

A titre d'illustration, un pneumatique concerné par l'invention a une désignation normalisée suivant l'ETRTO (Organisation Technique Européenne pour les Pneus et les Jantes) du type 59/80 R 63, avec une pression de gonflage à 650 kPa. Le diamètre extérieur du pneumatique monté sur une jante et gonflé à 650kPa peut mesurer plus de 4 mètres. On retrouve aussi d'autres dimensions de 49 à 57 pouces de diamètre sur ces véhicules.

### Définitions

Par convention, un repère (O, t, y, r), dont le centre O coïncide avec le centre du pneumatique, les directions circonférentielles (O, t), axiale (O, y), et radiale (O, r) désignent respectivement une direction tangente à la surface de roulement du pneumatique selon le sens de rotation, une direction parallèle à l'axe de rotation du pneumatique, et une direction orthogonale à l'axe de rotation du pneumatique.

Par radialement intérieur, respectivement radialement extérieur, on entend plus proche, respectivement plus éloigné de l'axe de rotation du pneumatique.

Par axialement intérieur, respectivement axialement extérieur, on entend plus proche, respectivement plus éloigné du plan équatorial du pneumatique, le plan équatorial du pneumatique étant le plan passant par le milieu de la bande de roulement du pneumatique et perpendiculaire à l'axe de rotation du pneumatique.

Par mélange élastomérique, ou mélange de caoutchouc on entend un matériau élastomérique obtenu par mélangeage de ses divers constituants. Un mélange élastomérique comprend classiquement une matrice élastomérique avec au moins un élastomère diénique de type caoutchouc naturel ou synthétique, au moins une charge renforçante de type noir de carbone et/ou de type silice, un système de réticulation le plus souvent à base de soufre, et des agents de protection.

Un mélange élastomérique peut être caractérisé mécaniquement, en particulier après cuisson, par ses propriétés dynamiques, telles qu'un module de cisaillement dynamique G*= (G'²+G"²)^{1/2}, où G' est le module de cisaillement élastique et G" le module de cisaillement visqueux, et une perte dynamique tgδ=G"/G'. Le module de cisaillement dynamique G* et la perte dynamique tgδ sont mesurés sur un viscoanalyseur de type Metravib VA4000, selon la norme ASTM D 5992-96. On enregistre la réponse d'un échantillon de mélange élastomérique vulcanisé, ayant la forme d'une éprouvette cylindrique de 4 mm d'épaisseur et de 400 mm² de section, soumis à une sollicitation sinusoïdale en cisaillement simple alterné, à la fréquence de 10Hz, avec un balayage en amplitude de déformation de 0,1% à 50% (cycle aller), puis de 50% à 0,1% (cycle retour), et à une température donnée, par exemple égale à 60 °C. Ces propriétés dynamiques sont ainsi mesurées pour une fréquence égale à 10 Hz, une déformation égale à 50% de l'amplitude de déformation crête-crête et une température pouvant être égale à 60°C ou 100°C.

Un mélange élastomérique peut également être caractérisé par des propriétés mécaniques statiques. Les essais de traction permettent de déterminer les contraintes d'élasticité et les propriétés à la rupture. Sauf indication différente, ils sont effectués conformément à la norme française N F T 46-002 de septembre 1988. On mesure en seconde élongation (i.e. après un cycle d'accommodation) les modules sécants dits "nominaux" (ou contraintes apparentes, en MPa) à 10% d'allongement (noté "MA10") et 100% d'allongement ("MA100"). Toutes ces mesures de traction sont effectuées dans les conditions normales de température (23±2°C) et d'hygrométrie (50±5% d'humidité relative), selon la norme française NF T 40-101 (décembre 1979). On mesure également les contraintes à la rupture (en MPa) et les allongements à la rupture (en %), à une température de 23°C.

### Technique antérieure

De façon générale un pneumatique comprend une bande de roulement, destinée à venir en contact avec un sol par l'intermédiaire d'une surface de roulement, dont les deux extrémités axiales sont reliées par l'intermédiaire de deux flancs à deux bourrelets assurant la liaison mécanique entre le pneumatique et la jante sur laquelle il est destiné à être monté.

Un pneumatique radial comprend en outre une armature de renforcement, constituée d'une armature de sommet, radialement intérieure à la bande de roulement, et d'une armature de carcasse, radialement intérieure à l'armature de sommet.

L'armature de carcasse d'un pneumatique radial pour véhicule lourd de type génie civil comprend habituellement au moins une couche de carcasse comprenant des renforts généralement métalliques, enrobés par un mélange de caoutchouc, obtenu par mélangeage et appelé mélange d'enrobage. Une couche de carcasse comprend une partie principale, reliant les deux bourrelets entre eux et s'enroulant généralement, dans chaque bourrelet, de l'intérieur vers l'extérieur du pneumatique autour d'un élément de renforcement circonférentiel le plus souvent métallique appelé tringle, pour former un retournement. Les renforts métalliques d'une couche de carcasse sont sensiblement parallèles entre eux et forment, avec la direction circonférentielle, un angle compris entre 85° et 95°.

L'armature de sommet d'un pneumatique radial pour véhicule lourd de type génie civil comprend une superposition de couches de sommet s'étendant circonférentiellement, radialement à l'extérieur de l'armature de carcasse. Chaque couche de sommet est constituée de renforts généralement métalliques, parallèles entre eux et enrobés par un mélange de caoutchouc appelé mélange d'enrobage.

Parmi les couches de sommet, on distingue usuellement les couches de protection, constitutives de l'armature de protection et radialement les plus à l'extérieur, et les couches de travail, constitutives de l'armature de travail et radialement comprises entre l'armature de protection et l'armature de carcasse.

L'armature de protection, comprenant au moins une couche de protection, protège essentiellement les couches de travail des agressions mécaniques ou physico-chimiques, susceptibles de se propager à travers la bande de roulement radialement vers l'intérieur du pneumatique.

L'armature de protection des pneumatiques de type GC tels ceux décrits précédemment comprend usuellement deux couches de protection, radialement superposées, formées de renforts métalliques élastiques, parallèles entre eux dans chaque couche et croisés d'une couche à la suivante, en formant, avec la direction circonférentielle, des angles au moins égaux à 10° et au plus égaux à 35°.

L'armature de travail, comprenant au moins deux couches de travail, a pour fonction de ceinturer le pneumatique et de lui conférer de la rigidité et de la tenue de route. Elle reprend à la fois des sollicitations mécaniques de gonflage, générées par la pression de gonflage du pneumatique et transmises par l'armature de carcasse, et des sollicitations mécaniques de roulage, générées par le roulage du pneumatique sur un sol et transmises par la bande de roulement. Elle doit en outre résister à l'oxydation et aux chocs et perforations, grâce notamment à sa conception intrinsèque et à celle de l'armature de protection.

L'armature de travail comprend usuellement deux couches de travail, radialement superposées, formées de renforts métalliques non extensibles, parallèles entre eux dans chaque couche et croisés d'une couche à la suivante, en formant, avec la direction circonférentielle, des angles au plus égaux à 60°, et, de préférence, au moins égaux à 15° et au plus égaux à 45°. On entend ici par renforts métalliques non extensibles, un renfort métallique caractérisé par un allongement, sous une force de traction égale à 10% de la force à rupture au plus égal à 0.2 %.

Pour diminuer les sollicitations mécaniques de gonflage transmises à l'armature de travail, il est connu de disposer, radialement à l'extérieur de l'armature de carcasse, une armature de frettage. L'armature de frettage, dont la fonction est de reprendre au moins en partie les sollicitations mécaniques de gonflage, améliore l'endurance de l'armature de sommet par une rigidification de l'armature de sommet. L'armature de frettage peut être positionnée radialement à l'intérieur de l'armature de travail, entre les deux couches de travail de l'armature de travail, ou radialement à l'extérieur de l'armature de travail.

L'armature de frettage comprend usuellement deux couches de frettage, radialement superposées, formées de renforts métalliques, parallèles entre eux dans chaque couche et croisés d'une couche à la suivante, en formant, avec la direction circonférentielle, des angles au plus égaux à 10°.

L'exploitation minière consiste à extraire des minerais, c'est-à-dire des roches de la croûte terrestre contenant des minéraux ou des métaux utiles, en proportion suffisamment intéressante pour justifier leur exploitation.

L'étape de transport dans une exploitation minière est essentielle pour sa rentabilité économique. Les véhicules (Dumper ou tombereau) sont généralement actifs sans arrêt de manière à obtenir une productivité maximale en déplaçant le plus gros volume de gravats pour être traités par des procédés de minéralurgie.

La gestion des pneumatiques de la flotte des véhicules consiste à surveiller la pression de gonflage, la température, et l'usure dans une approche de maintenance prédictive de manière à anticiper les dysfonctionnements liés aux pneumatiques, et donc à éviter l'arrêt du véhicule pour maximiser sa durée d'usage.

Ainsi une des attentes du client exploiteur des mines est la productivité de l'exploitation qui ne doit pas être affectée par des défaillances du produit, et donc la durée d'utilisation des pneumatiques qui doit être la plus longue possible. Il faut éviter les immobilisations des véhicules et par conséquent, il faut développer la maintenance préventive pour une utilisation maîtrisée des pneumatiques.

Le suivi de la température des pneumatiques en temps réel est une étape essentielle de la gestion de la flotte de véhicules. La température est en lien direct avec l'endurance, et la durée de vie des pneumatiques.

On notera que les documents US5731754A, US2017282657A1, US10836223B1, WO2004016454A1, US2005057346A1 proposent des solutions pour accéder à la mesure de la température dans les mélanges du pneumatique.

Dans le document FR3060463, un procédé d'estimation de la sévérité des conditions d'utilisation d'un pneumatique monté sur véhicule est proposé. Une étape de ce procédé évalue la température à l'intérieur d'un mélange, mais cette évaluation est basée sur un modèle mathématique qui peut être complexe à mettre en œuvre dans certains cas.

On connait de la demande WO 2008046766A1 un procédé d'indication du vieillissement subi par un pneumatique, dans lequel on mesure une température localement au moins en un point du pneumatique. Ce procédé nécessite l'installation d'un capteur de température directement dans le pneumatique, ce qui peut engendrer des coûts supplémentaires.

Il existe encore un besoin d'accéder aux températures à l'intérieur des mélanges de caoutchouc d'un pneumatique en roulage, d'une manière simple et non destructrice. Il faut pouvoir localiser les zones du pneumatique les plus sensibles thermiquement pour mesurer la température en temps réel. Pour cela, les conditions de roulage telles que la nature des sols selon qu'ils soient caillouteux, boueux, ou asphaltés, la structure interne du pneumatique, ou encore la topographie de la mine d'exploitation sont à prendre en considération.

### Exposé de l'invention

L'objectif de l'invention est de proposer un système de mesure de la température à l'intérieur des mélanges de caoutchouc selon les conditions énumérées ci-dessus.

La solution proposée par l'invention consiste en un système de mesure de la température à l'intérieur d'un mélange de caoutchouc d'un pneumatique en roulage selon la revendication 1, comprenant au moins
un capteur muni d'un microprocesseur, des moyens de transmission radio, d'une sonde de mesure de la température, des moyens d'alimentation tel que :
- le capteur est inséré dans une zone du pneumatique issu d'un procédé de fabrication, ladite zone étant identifiée selon des critères de sélection prédéfinis ;
- ledit capteur est enfoui dans un volume hermétiquement clos aménagé à l'intérieur d'un mélange de caoutchouc du pneumatique issu d'un procédé de fabrication;
- le système comprend des moyens de maintien en position fixe du capteur pendant le roulage du pneumatique.

Un pneumatique du génie civil comprend une bande de roulement destinée à être en contact un sol. La nature du sol varie selon les conditions d'utilisation, tantôt, boueux, caillouteux, ou encore asphalté. Pour s'adapter aux différents types de sol, la bande de roulement comporte des découpures, notamment transversales ou circonférentielles de manière à définir des blocs de mélange de caoutchouc destinés à assurer une adhérence suffisante quelle que soit la nature du sol pour transmettre le couple du véhicule. Les blocs de mélange de caoutchouc de la bande de roulement comportent également des incisions pour former des lamelles d'assouplissement en vue de favoriser l'adhérence sur par exemple des sols enneigés.

Comme rappelé ci-dessus, la structure interne de ces pneumatiques comporte plusieurs couches de sommet. Chaque couche de sommet comprend des renforts enrobés dans des mélanges de caoutchouc. A l'extrémité de ces couches de sommet, il est connu que la température atteint des niveaux élevés à cause de l'amplitude des déformations en ces endroits.

Les critères de sélection de la zone d'insertion des capteurs peuvent être par exemple de choisir des blocs de mélange de caoutchouc de la bande de roulement, ou encore les extrémités de couches de sommet. Des critères complémentaires peuvent être définis en fonction des conditions de roulage telles que la nature des sols selon qu'ils soient caillouteux, boueux, ou asphaltés, la structure interne du pneumatique, ou encore la topographie de la mine d'exploitation.

Au sens de l'invention un pneumatique issu d'un procédé de fabrication signifie que l'invention se rapporte à un pneumatique déjà fabriqué et que l'insertion du capteur n'interfère pas avec le procédé de fabrication du pneumatique. L'insertion des capteurs peut être réalisé avant ou après le montage du pneumatique sur l'essieu du véhicule.

Le capteur est enfoui dans un volume hermétiquement clos veut dire qu'un emplacement a été créé à cet effet puis obturé de manière hermétique après l'insertion du capteur.

Une des caractéristiques de l'invention est d'accéder directement à la température à l'intérieur du mélange de caoutchouc sélectionné. Le capteur doté de moyens de transmission radio n'est pas relié à l'extérieur ce qui permet de mesurer la température du pneumatique en roulage sans arrêter le véhicule. Ce moyen de mesure n'affecte pas la productivité de l'exploitation minière, car le véhicule n'est pas arrêté pour effectuer les mesures de température.

Les moyens de transmission radio comprennent pour chaque capteur un émetteur actif qui comprend une puce électronique qui stocke les données et une antenne pour fonctionner dans une bande de fréquence donnée. L'émetteur actif communique à intervalles de temps régulier l'identifiant du capteur et la valeur de la température à un récepteur situé dans le véhicule. Le microprocesseur du capteur moyenne la température sur l'intervalle de temps compris entre deux émissions. L'émetteur, tout comme le microprocesseur consomment l'énergie fournie par la pile d'alimentation.

Les moyens de transmission sont unidirectionnels, et fonctionnent avec une faible consommation d'énergie, principalement due à l'émission radio. Une telle conception des moyens de transmission permet une miniaturisation du capteur, et la minimisation des coûts. Elle procure également une bonne tenue et une bonne durabilité malgré l'environnement très contraignant dans lequel évoluent les pneumatiques d'engins de génie civil.

Une autre caractéristique de l'invention est que les moyens de maintien permettent de garder le capteur en une position fixe sans mouvements, sans vibrations avec le milieu environnant de manière à obtenir une mesure de qualité satisfaisante. Ces moyens de maintien sont de différentes natures, comme par exemple chimique avec des colles d'adhésion ou encore mécanique avec un dispositif de serrage en lien avec le dimensionnement des composantes du dispositif.

Les mesures obtenues avec le capteur ont été comparées avec des résultats d'évaluation classique de la température comme par exemple avec des thermocouples et ont confirmé à la fois la qualité et la précision des valeurs obtenues avec l'invention.

Préférentiellement, une couche de colle adhésive de vulcanisation à froid est posée entre la surface extérieure du capteur et le mélange de caoutchouc de la cavité.

On entend par colle de vulcanisation à froid une colle qui provoque une réaction chimique consistant à incorporer un agent vulcanisant, du soufre le plus souvent, à un élastomère brut pour former des ponts entre les chaînes moléculaires. Cette opération rend notamment le matériau moins plastique mais plus élastique.

Les inventeurs ont observé que l'utilisation d'une telle colle dans le contexte de l'invention permet d'avoir un collage de haute qualité entre le capteur et le mélange de caoutchouc de la cavité.

Un exemple préférentiel de colle adhésive est celle produite par la société Tiptop commercialisée sous la désignation colle "blue cement".

D'un point de vue pratique, on perfore la surface extérieure du pneumatique pour accéder à la zone sélectionnée, et à la position voulue d'installation du capteur. A titre d'exemple, le capteur peut être positionné à l'extrémité des couches de sommet de protection à l'endroit où l'épaisseur radiale du pneumatique est maximale. Après un nettoyage de la cavité perforée, on utilise la colle de type "blue cement" pour coller le capteur au fond et sur les parois de la cavité. Pour cela, une épaisseur de colle d'au moins deux millimètres est apposée sur toute la surface extérieure du capteur. Pour le type de colle utilisé, le temps de prise de la colle est au minimum de vingt-quatre-heures pour cette utilisation.

La couche de colle adhésive sert avantageusement de lubrifiant pour faciliter la pénétration du capteur dans la couche de mélange de caoutchouc du pneumatique.

En effet, une fois la cavité creusée dans le pneumatique à l'endroit voulu, il faut pouvoir y faire pénétrer le capteur de façon à faire un serrage avec la paroi. Pour faciliter cette pénétration, la colle est choisie de façon à assurer à la fois les fonctions de collage et de lubrifiant.

Selon l'invention, le capteur comporte au moins une partie des moyens de fixation pour le maintenir en position fixe. La surface extérieure du capteur est ainsi cannelée pour favoriser la fixation du capteur dans le mélange de caoutchouc du pneumatique dont la température est mesurée. En effet, les cannelures définissent des aspérités de la surface extérieure du capteur pour faciliter l'ancrage dans le mélange de caoutchouc.

Dans un mode de réalisation, le capteur occupe un volume cylindrique dont la longueur du cylindre est inférieure ou égale à l'épaisseur radiale de la bande de roulement mesurée dans un plan équatorial du pneumatique. Avantageusement, dans une variante de réalisation, le capteur occupe un volume cylindrique dont la longueur du cylindre est inférieure ou égale à 60 mm, et dans lequel le diamètre du cylindre est inférieur ou égal à 25 mm.

Préférentiellement, la longueur du cylindre est inférieure ou égale à 45mm. Les risques de dégradation du cylindre, par exemple par flexion, sont minimisés avec une telle longueur.

Encore préférentiellement, le diamètre du cylindre est inférieur ou égal à 17 mm.

Dans ce mode de réalisation, la cavité est avantageusement creusée à l'aide d'une perceuse munie d'un foret. La longueur et le diamètre de la cavité sont définis à des valeurs suffisamment faibles en relatif par rapport à la dimension du pneumatique de manière à pouvoir réutiliser le pneumatique sans réparation lourde après extraction du capteur.

Un cas particulier très avantageux de ce mode de réalisation correspond à la situation où le capteur de géométrie cylindrique est logé dans une cavité cylindrique à l'intérieur du mélange de caoutchouc dont le diamètre de ladite cavité cylindrique est inférieur ou égal à celui du capteur.

La pénétration du capteur dans la cavité se fait avec un serrage naturel quand le capteur et la cavité ont le même diamètre.

Lorsque la mesure de la température doit être effectuée proche des couches de sommet, la profondeur de la cavité est significativement supérieure à la longueur du capteur. En effet, l'épaisseur radiale de la bande de roulement des pneumatiques considérés ici est bien supérieure à la longueur du capteur. Ainsi, après la fixation du capteur au fond et sur les parois de la cavité, il subsiste un volume vide dirigé vers l'extérieur du pneumatique qu'il convient d'obturer afin de protéger le capteur. Préférentiellement, la cavité contenant le capteur est refermée par un bouchon constitué du même mélange de caoutchouc que celui contenant le capteur.

Le capteur enfermé à l'intérieur d'un mélange de caoutchouc subit des sollicitations périodiques mécaniques et thermiques du fait de la rotation du pneumatique. Le capteur regroupe les composants qui le constituent, tels qu'un thermocouple, un microprocesseur un émetteur radio et une pile d'alimentation sur une carte électronique. Afin de préserver encore mieux l'intégrité de cette carte électronique, avantageusement, ladite carte électronique est enrobée dans une résine d'encapsulation.

La résine d'encapsulation est de préférence à base d'époxyde pour assurer au mieux la protection de la carte électronique. Pour une protection complémentaire mécanique, le capteur est encore avantageusement moulé dans un matériau souple dont le module de rigidité dynamique en cisaillement est inférieur ou égal au quart du module de rigidité dynamique en cisaillement du mélange dont la température est mesurée. De cette façon, les déformations subies par la portion de mélange de caoutchouc contenant le capteur vont affecter principalement cette couche de matériau souple de protection.

Comme dit précédemment, le capteur qui comporte des moyens de transmission par radio fonctionne à distance pendant l'utilisation du pneumatique en roulage. Dans une variante de réalisation de l'invention, l'activation du capteur consiste à rompre un fil reliant deux électrodes du capteur. L'activation du capteur entraîne le début des opérations de mesure de la température, et le début des émissions des valeurs de température et de l'identifiant du capteur de manière répétée.

Dans une variante du mode de réalisation de l'invention, le pneumatique contient une étiquette d'identification.

Selon cette variante de ce mode de réalisation, le capteur est muni d'un module électronique actif de mesure et de transfert de paramètres physiques du pneumatique, et ledit capteur comporte :
i. des moyens de mesure d'autres paramètres physiques que la Température du pneumatique ;
ii. des moyens de lecture de l'étiquette d'identification du pneumatique ;
iii. un module de transmission de données permettant de transmettre les données physiques reçues du capteur y compris l'identification du pneumatique à un récepteur distant ;

Dans ce mode de réalisation, le capteur est muni de plusieurs moyens de mesure des paramètres physiques, comme par exemple un dispositif de mesure piézoélectrique, ou encore un détecteur de pression. Le pneumatique et le capteur possèdent chacun une étiquette passive d'identification. Selon ce mode de réalisation, avantageusement, on prévoit que l'étiquette passive d'identification du pneumatique peut être une étiquette RFID indépendante du capteur.

Ce mode de réalisation de l'invention permet une gestion du suivi des pneumatiques qui consiste à connaître de façon fiable, en tout instant leur localisation, celle des pneumatiques et celle du capteur de mesure des paramètres physiques associés.

### Description des Figures

L'invention sera mieux comprise à la lecture de la description qui va suivre, donnée à titre d'exemple non limitatif et faite en se référant aux figures (1-A, 1-B, 2,3-A, 3-B), dans lesquels :
- Les figures 1-A, et 1-B représentent des vues du capteur du système de mesure de la température proposée par l'invention.
- La figure 2 est un plan méridien (y,r) du pneumatique, c'est-à-dire un plan générateur du pneumatique en trois dimensions par la rotation de ce plan méridien autour de l'axe (O, y) du repère cylindrique (O, t, y, r) associé au pneumatique.
- Les figures 3-A, et 3-B représentent les courbes de résultats de mesures de température obtenues avec des moyens de l'invention sur une dimension pneumatique testée.

### Description détaillée

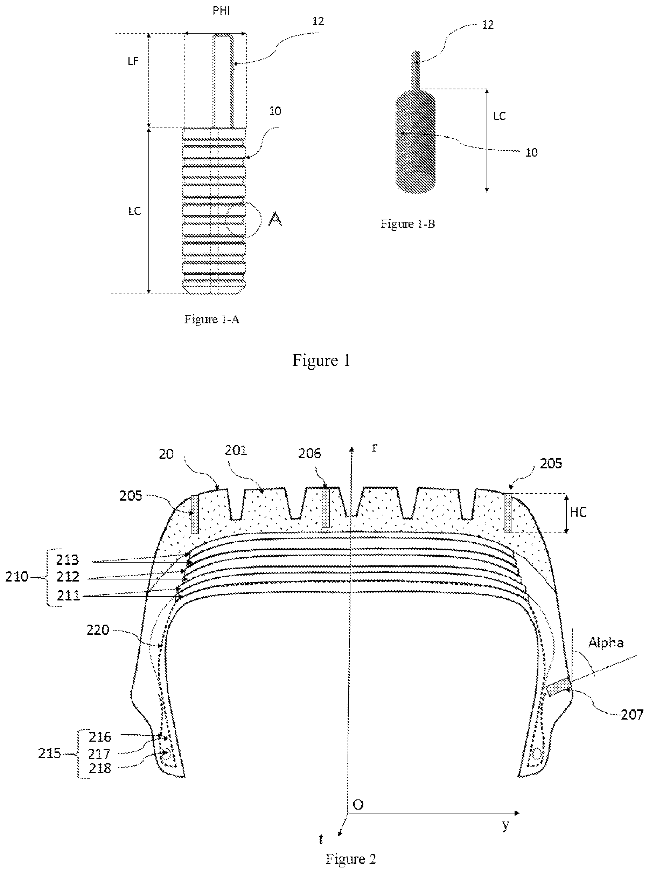

La figure 1-A montre le capteur 10 qui a une géométrie de forme cylindrique, d'une longueur LC et d'un diamètre PHI, avec le fil d'activation 12 qui a une longueur LF. Sur la figure 1-B, on peut voir une vue volumique du capteur 10. Le capteur 10 est destiné à être inséré dans le pneumatique 20 de la figure 2. La référence A de la figure 1-A montre des cannelures qui sont une succession de creux et bosses dans la direction la plus longue du capteur, et lesdites cannelures sont destinées à faciliter l'encrage du capteur dans un mélange de caoutchouc du pneumatique 20.

Le pneumatique 20 est monté sur un véhicule muni d'un dispositif de communication avec ledit capteur.

Les moyens de lecture positionnés dans le véhicule stockent les données dans une base de données, accessible par un serveur à distance. Le capteur 10 comprend une carte électronique avec un circuit reliant les composantes telles qu'une sonde de mesure de la température, un microprocesseur, un émetteur radio, un transpondeur et une pile d'alimentation.

Lors de l'activation du capteur avant son insertion dans le mélange de caoutchouc, le fil d'activation 12 est coupé à son extrémité en contact avec le capteur.

Sur la figure 2, le pneumatique 20 comporte une bande de roulement 201 représentée par le volume comprenant des points noirs radialement le plus extérieur du pneumatique. L'armature de sommet 210 est formée d'une armature de travail 211, d'une armature de protection 212 et d'une armature de frettage 213 radialement superposées extérieurement. Chaque armature comprend deux couches formées de renforts enrobés dans des mélanges de caoutchouc. Finalement, l'armature de sommet comprend dans cet exemple six couches de sommet radialement superposées formées chacune de renforts enrobés dans des mélanges de caoutchouc. Radialement intérieurement à l'armature de sommet 210 prend place l'armature de carcasse 220 qui comprend au moins une couche de carcasse formée d'un brin aller 217 qui contourne une tringle 218 axialement de l'intérieur vers l'extérieur du bourrelet, et se poursuit radialement extérieurement par un brin retour 216. Les renforts de la couche de carcasse font un angle d'environ 90° avec la direction circonférentielle.

Cette architecture optimise l'endurance du pneumatique pour porter la charge requise, mais présente l'inconvénient d'être sensible à la température qui catalyse les phénomènes de fissuration et d'endommagement du pneumatique, notamment à l'extrémité des couches de sommet.

Toujours sur la figure 2, des cavités 205 à l'extrémité des couches de sommet et des cavités 206 au centre de la bande de roulement, orientées de la périphérie extérieure du pneumatique vers l'intérieur des mélanges de caoutchouc sont creusées pour recevoir respectivement un capteur 10 de mesure de la température. L'invention fonctionne également avec des cavités 207 positionnées radialement intérieurement. On peut visualiser l'angle Alpha que fait la direction de perçage avec la direction radiale ainsi que la profondeur HC de la cavité. Pour les cavités 205 et 206, la direction de perçage est parallèle à la direction radiale et donc l'angle Alpha est nul. Dans cet exemple, chaque capteur 10 a une longueur de 45 mm et un diamètre de 17 mm de manière à occuper un volume relativement petit au regard de la dimension du pneumatique. En effet, à l'issue des mesures, on doit pouvoir extraire chaque capteur sans endommager le pneumatique.

L'invention a été mise en œuvre sur un pneumatique de dimension 59/80 R63 désignée selon le référentiel ETRTO, (Organisation Européenne pour les pneumatiques et les jantes) qui équipe un véhicule de type Tombereau. Le pneumatique testé est gonflé à 650 kPa.

L'essieu avant du Tombereau a été équipé avec ces pneumatiques ci-dessus mentionnées. La charge à l'essieu avant est de 63 tonnes.

Les capteurs ont été positionnés pour mesurer la température proche des couches de sommet au niveau des épaules dans des cavités 205, et au centre du pneumatique dans des cavités 206. Ces zones ont été identifiées comme étant les plus sensibles à la température par simulation numérique en tenant compte de l'usage des pneumatiques et notamment de la mine exploitée. Le test s'est déroulé sur 10 jours.

Le capteur comprend une carte électronique munie d'une sonde de mesure de température, un émetteur radio, qui peut être interrogé par un lecteur positionné dans le véhicule. La sonde de température, l'émetteur radio, et le lecteur sont de références classiques accessibles dans le commerce. La période de transmission des données du capteur vers le véhicule est de cinq minutes.

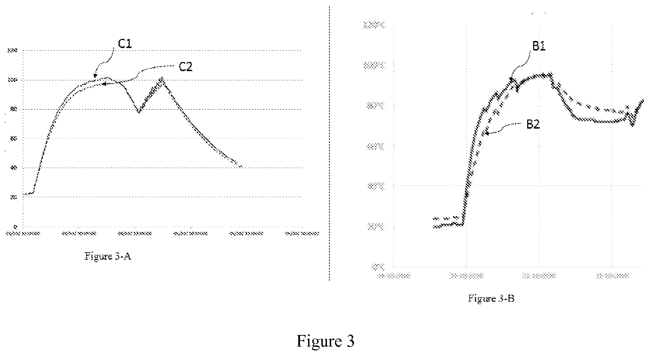

Sur la figure 3-A, on peut voir la comparaison entre la température mesurée par thermocouples (courbe en traits discontinus, courbe C2) et la température mesurée par des moyens de l'invention (courbe en traits continus, courbe C1). Ce résultat a été obtenu en rajoutant sur un pneumatique de l'invention des thermocouples pour faire un test comparatif avec les mêmes conditions de sollicitations sur une machine appropriée.

La figure 3-B montre deux courbes B1 et B2 qui reproduisent l'évolution de la température aux extrémités des couches de sommet (courbe B1 en traits continus) et au centre de la bande de roulement (courbe B2 en traits discontinus) à une profondeur d'au moins 45 mm pendant le roulage du pneumatique. Sur la figure 3-B, l'axe des abscisses représente les jours de roulage, et l'axe des ordonnées représente la température.

L'invention présente l'avantage d'accéder de manière simple au niveau de température dans les mélanges de caoutchouc et en automatique au détriment des approches classiques par exemple, par thermocouples qui peuvent avoir un impact négatif sur la productivité de l'exploitation minière. En effet les véhicules ne sont pas arrêtés et les interventions humaines sont limitées dans la méthode de mesure de la température proposée par l'invention.

Les moyens de mesure de l'invention donnent des résultats conformes à ceux obtenus avec des moyens traditionnels tels que les thermocouples. Les moyens de mesure, leur méthode d'insertion, les moyens de maintien des capteurs en position fixe, ainsi que les moyens de communication des valeurs de la température mesurées sont confirmés par ces résultats.

Un premier exemple d'application des résultats de l'invention est d'adapter les conditions d'utilisation des pneumatiques en temps réels en fonction du niveau moyen de température. Des dispositifs d'alerte peuvent être mis en place pour prévenir le conducteur quand la température atteint un niveau excessif, et lui indiquer qu'il doit adapter sa conduite pour préserver les pneumatiques.

Un deuxième exemple d'exploitation des résultats de mesure est de déterminer la température de l'air interne de gonflage, par exemple à partir d'abaques ou de modèles numériques et donc de calculer l'évolution de la pression de gonflage pendant le roulage du pneumatique. De cette façon, on peut gérer un compromis de performances entre l'usure et l'endurance par exemple.

Le principe de l'invention peut être extrapolé à d'autres types de pneumatiques que ceux décrits ici, notamment de type poids lourd, et d'une façon plus générale à des pneumatiques dont l'épaisseur radiale de la bande de roulement est suffisante pour mettre en œuvre l'invention.

## Revendications

1. Système de mesure de la température à l'intérieur d'un mélange de caoutchouc d'un pneumatique (20) en roulage, comprenant au moins un capteur (10) muni d'un microprocesseur, des moyens de transmission radio, d'une sonde de mesure de la température, des moyens d'alimentation, le capteur étant inséré dans une zone du pneumatique issu d'un procédé de fabrication, ladite zone étant identifiée selon des critères de sélection prédéfinis, ledit capteur (10) étant enfoui dans un volume hermétiquement clos aménagé à l'intérieur d'un mélange de caoutchouc de ladite zone du pneumatique issu d'un procédé de fabrication, la surface extérieure du capteur est cannelée, le système comprenant des moyens de maintien en position fixe du capteur pendant le roulage du pneumatique, **caractérisé en ce que** le capteur (10) est moulé dans un matériau souple dont le module de rigidité dynamique en cisaillement est inférieur ou égal au quart du module de rigidité dynamique en cisaillement du mélange dont la température est mesurée, les modules dynamiques de rigidité en cisaillement étant mesurés pour une fréquence égale à 10 Hz, une déformation égale à 50% de l'amplitude de déformation crête-crête et une température égale à 60°C.

2. Système de mesure de la température à l'intérieur d'un mélange de caoutchouc d'un pneumatique (20) en roulage selon la revendication 1 **dans lequel** une couche de colle adhésive de vulcanisation à froid est posée entre la surface extérieure du capteur et le mélange de caoutchouc d'une cavité.

3. Système de mesure de la température à l'intérieur d'un mélange de caoutchouc d'un pneumatique (20) en roulage selon la revendication 2 **dans lequel** ladite couche de colle adhésive est un lubrifiant.

4. Système de mesure de la température à l'intérieur d'un mélange de caoutchouc d'un pneumatique (20) en roulage selon l'une des revendications précédentes **dans lequel** le capteur (10) occupe un volume cylindrique dont la longueur du cylindre est inférieure ou égale à 60 mm, **et dans lequel** le diamètre du cylindre est inférieur ou égal à 25 mm.

5. Système de mesure de la température à l'intérieur d'un mélange de caoutchouc d'un pneumatique (20) en roulage selon la revendication précédente **dans lequel** le capteur de géométrie cylindrique est logé dans une cavité cylindrique à l'intérieur du mélange de caoutchouc de ladite zone dont le diamètre de ladite cavité cylindrique est inférieur ou égal à celui du capteur.

6. Système de mesure de la température à l'intérieur d'un mélange de caoutchouc d'un pneumatique (20) en roulage selon l'une des revendications précédentes **dans lequel** la cavité contenant le capteur (10) est refermée par un bouchon constitué du même mélange de caoutchouc que celui contenant le capteur (10).

7. Système de mesure de la température à l'intérieur d'un mélange de caoutchouc d'un pneumatique (20) en roulage selon l'une des revendications précédentes, **dans lequel** le capteur (10) comprend une carte électronique comportant un thermocouple, un microprocesseur, un émetteur radio et une pile d'alimentation, ladite carte électronique étant enrobée dans une résine d'encapsulation.

8. Système de mesure de la température à l'intérieur d'un mélange de caoutchouc d'un pneumatique (20) en roulage selon l'une des revendications précédentes, **caractérisé en ce que** le capteur (10) comprend un fil d'activation reliant deux électrodes du capteur.

9. Système de mesure de la température à l'intérieur d'un mélange de caoutchouc d'un pneumatique (20) en roulage selon l'une des revendications précédentes, **dans lequel** le pneumatique (20) contient une étiquette d'identification.

10. Système de mesure de la température à l'intérieur d'un mélange de caoutchouc d'un pneumatique (20) en roulage selon la revendication précédente, **dans lequel** le capteur est muni d'un module électronique actif de mesure et de transfert de paramètres physiques du pneumatique, et ledit capteur comporte :
i. des moyens de mesure d'autres paramètres physiques que la température du pneumatique (20) ;
ii. des moyens de lecture de l'étiquette du pneumatique (20) ;
iii. un module de transmission de données permettant de transmettre les données physiques reçues du capteur (10) à un récepteur distant.

## Patentansprüche

1. System zur Messung der Temperatur im Inneren einer Kautschukmischung eines rollenden Reifens (20), das mindestens einen Sensor (10) umfasst, der mit einem Mikroprozessor, Funkübertragungsmitteln, einer Messsonde für die Temperatur und Stromversorgungsmitteln ausgestattet ist, wobei der Sensor in einen Bereich des durch ein Herstellungsverfahren erhaltenen Reifens eingesetzt ist, wobei dieser Bereich anhand von vordefinierten Auswahlkriterien identifiziert wird, wobei der Sensor (10) in einem hermetisch verschlossenen Volumen verborgen ist, das im Inneren einer Kautschukmischung des Bereichs des durch ein Herstellungsverfahren erhaltenen Reifens ausgebildet ist, wobei die Außenfläche des Sensors gerillt ist, wobei das System Mittel zum Halten des Sensors in einer festen Position während des Rollens des Reifens umfasst, **dadurch gekennzeichnet, dass** der Sensor (10) aus einem flexiblen Material geformt ist, dessen dynamischer Steifemodul bei Schubbeanspruchung kleiner oder gleich einem Viertel des dynamischen Steifemoduls bei Schubbeanspruchung der Mischung ist, deren Temperatur gemessen wird, wobei die dynamischen Steifemodule bei Schubbeanspruchung für eine Frequenz von 10 Hz, eine Verformung von 50 % der Verformungsamplitude Peak-Peak und eine Temperatur von 60 °C gemessen werden.

2. System zur Messung der Temperatur im Inneren einer Kautschukmischung eines rollenden Reifens (20) nach Anspruch 1, wobei eine Schicht Klebstoff für Kaltvulkanisation zwischen der Außenfläche des Sensors und der Kautschukmischung eines Hohlraums angebracht ist.

3. System zur Messung der Temperatur im Inneren einer Kautschukmischung eines rollenden Reifens (20) nach Anspruch 2, wobei die Schicht Klebstoff ein Schmiermittel ist.

4. System zur Messung der Temperatur im Inneren einer Kautschukmischung eines rollenden Reifens (20) nach einem der vorhergehenden Ansprüche, wobei der Sensor (10) ein zylindrisches Volumen einnimmt, bei dem die Länge des Zylinders kleiner oder gleich 60 mm ist, und wobei der Durchmesser des Zylinders kleiner oder gleich 25 mm ist.

5. System zur Messung der Temperatur im Inneren einer Kautschukmischung eines rollenden Reifens (20) nach dem vorhergehenden Anspruch, wobei der Sensor mit zylindrischer Geometrie in einem zylindrischen Hohlraum im Inneren der Kautschukmischung des Bereichs aufgenommen ist, wobei der Durchmesser des zylindrischen Hohlraums kleiner oder gleich demjenigen des Sensors ist.

6. System zur Messung der Temperatur im Inneren einer Kautschukmischung eines rollenden Reifens (20) nach einem der vorhergehenden Ansprüche, wobei der den Sensor (10) enthaltende Hohlraum durch einen Stopfen verschlossen ist, der aus einer Kautschukmischung besteht, die dieselbe wie diejenige ist, die den Sensor (10) enthält.

7. System zur Messung der Temperatur im Inneren einer Kautschukmischung eines rollenden Reifens (20) nach einem der vorhergehenden Ansprüche, wobei der Sensor (10) eine elektronische Platine umfasst, die ein Thermoelement, einen Mikroprozessor, einen Funksender und eine Versorgungsbatterie aufweist, wobei die elektronische Platine in ein Verkapselungsharz eingebettet ist.

8. System zur Messung der Temperatur im Inneren einer Kautschukmischung eines rollenden Reifens (20) nach einem der vorhergehenden Ansprüche, **dadurch gekennzeichnet, dass** der Sensor (10) einen Aktivierungsdraht umfasst, der zwei Elektroden des Sensors verbindet.

9. System zur Messung der Temperatur im Inneren einer Kautschukmischung eines rollenden Reifens (20) nach einem der vorhergehenden Ansprüche, wobei der Reifen (20) ein Identifikationsetikett enthält.

10. System zur Messung der Temperatur im Inneren einer Kautschukmischung eines rollenden Reifens (20) nach dem vorhergehenden Anspruch, wobei der Sensor mit einem aktiven Elektronikmodul zur Messung und Übertragung physikalischer Parameter des Reifens ausgestattet ist und der Sensor aufweist:
i. Mittel zur Messung anderer physikalischer Parameter als der Temperatur des Reifens (20);
ii. Mittel zum Lesen des Etiketts des Reifens (20);
iii. ein Modul zur Übertragung von Daten, das eine Übertragung der von dem Sensor (10) empfangenen physikalischen Daten an einen entfernten Empfänger gestattet.

## Claims

1. System for measuring the temperature inside a rubber compound of a tyre (20) when it is running, comprising at least one sensor (10) fitted with a microprocessor, radio transmission means, a temperature measuring probe and power supply means, the sensor being inserted in an area of the tyre originating from a manufacturing process, said area being identified depending on predefined selection criteria, said sensor (10) being embedded in a hermetically sealed volume formed inside a rubber compound of said area of the tyre originating from a manufacturing process, the outer surface of the sensor is grooved, the system comprising means for keeping the sensor in a fixed position while the tyre is running, **characterized in that** the sensor (10) is moulded from a flexible material of which the dynamic shear stiffness modulus is less than or equal to one quarter of the dynamic shear stiffness modulus of the compound of which the temperature is measured, the dynamic shear stiffness moduli being measured for a frequency equal to 10 Hz, a strain equal to 50% of the peak-to-peak strain amplitude, and a temperature equal to 60°C.

2. System for measuring the temperature inside a rubber compound of a tyre (20) when it is running according to Claim 1, **wherein** a layer of cold-vulcanized adhesive is laid between the outer surface of the sensor and the rubber compound of a cavity.

3. System for measuring the temperature inside a rubber compound of a tyre (20) when it is running according to Claim 2, **wherein** said layer of adhesive is a lubricant.

4. System for measuring the temperature inside a rubber compound of a tyre (20) when it is running according to one of the preceding claims, **wherein** the sensor (10) occupies a cylindrical volume of which the length of the cylinder is less than or equal to 60 mm, **and wherein** the diameter of the cylinder is less than or equal to 25 mm.

5. System for measuring the temperature inside a rubber compound of a tyre (20) when it is running according to the preceding claim, **wherein** the sensor of cylindrical geometry is received in a cylindrical cavity inside the rubber compound in said area of which the diameter of said cylindrical cavity is less than or equal to that of the sensor.

6. System for measuring the temperature inside a rubber compound of a tyre (20) when it is running according to one of the preceding claims, **wherein** the cavity containing the sensor (10) is closed by a stopper made of the same rubber compound as that containing the sensor (10).

7. System for measuring the temperature inside a rubber compound of a tyre (20) when it is running according to one of the preceding claims, **wherein** the sensor (10) comprises an electronic circuit board having a thermocouple, a microprocessor, a radio transmitter and a battery, said electronic circuit board being coated in an encapsulating resin.

8. System for measuring the temperature inside a rubber compound of a tyre (20) when it is running according to one of the preceding claims, **characterized in that** the sensor (10) comprises an activation wire connecting two electrodes of the sensor.

9. System for measuring the temperature inside a rubber compound of a tyre (20) when it is running according to one of the preceding claims, **wherein** the tyre (20) contains an identification tag.

10. System for measuring the temperature inside a rubber compound of a tyre (20) when it is running according to the preceding claim, **wherein** the sensor is fitted with an active electronic module for measuring and transferring physical parameters of the tyre, and said sensor has:
i. means for measuring different physical parameters to the temperature of the tyre (20);
ii. means for reading the tag of the tyre (20);
iii. a data transmission module for transmitting the physical data received from the sensor (10) to a remote receiver.
